(19) **Europäisches Patentamt / European Patent Office / Office européen des brevets**

(11) **EP 4 423 604 B1**

(12) **EUROPEAN PATENT SPECIFICATION**

(45) Date of publication and mention
of the grant of the patent:
**28.01.2026  Bulletin 2026/05**

(21) Application number: **22821827.7**

(22) Date of filing: **28.11.2022**

(51) International Patent Classification (IPC):
**G06F 9/455** *(2018.01)*    **G06F 9/50** *(2006.01)*

(52) Cooperative Patent Classification (CPC):
**G06F 9/45558; G06F 9/5088;** G06F 2009/4557;
G06F 2009/45579; G06F 2009/45591

(86) International application number:
**PCT/US2022/080508**

(87) International publication number:
**WO 2023/102353 (08.06.2023 Gazette 2023/23)**

(54) **AUTOMATED RECOVERY OF STRANDED RESOURCES WITHIN A CLOUD COMPUTING ENVIRONMENT**

AUTOMATISIERTE WIEDERHERSTELLUNG VON GESTRANDETEN RESSOURCEN IN EINER CLOUD-COMPUTING-UMGEBUNG

RÉCUPÉRATION AUTOMATISÉE DE RESSOURCES DÉLAISSÉES DANS UN ENVIRONNEMENT INFORMATIQUE EN NUAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **02.12.2021  LU 500944**

(43) Date of publication of application:
**04.09.2024  Bulletin 2024/36**

(73) Proprietor: **Microsoft Technology Licensing, LLC
Redmond, WA 98052-6399 (US)**

(72) Inventors:
• **AGARWAL, Saurabh
  Redmond, Washington 98052 (US)**
• **QIAO, Bo
  Redmond, Washington 98052 (US)**
• **DU, Chao
  Redmond, Washington 98052 (US)**
• **CHEN, Jayden
  Redmond, Washington 98052 (US)**

• **SUBRAMANIAN, Karthikeyan
  Redmond, Washington 98052 (US)**
• **SHETH, Nisarg
  Redmond, Washington 98052 (US)**
• **LIN, Qingwei
  Redmond, Washington 98052 (US)**
• **QIN, Si
  Redmond, Washington 98052 (US)**
• **MOSCIBRODA, Thomas
  Redmond, Washington 98052 (US)**
• **RODRIGUEZ, Luke Rafael
  Redmond, Washington 98052 (US)**

(74) Representative: **CMS Cameron McKenna Nabarro Olswang LLP
Cannon Place
78 Cannon Street
London EC4N 6AF (GB)**

(56) References cited:
**CN-A- 110 493 317    US-A1- 2021 149 743**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 423 604 B1

**Description**

**TECHNICAL FIELD**

The present disclosure relates to systems, methods, and devices that manage resource utilization within a cloud computing environment.

**BACKGROUND**

Computer systems and related technology affect many aspects of society. Indeed, the computer system's ability to process information has transformed the way we live and work. More recently, computer systems have been coupled to one another and to other electronic devices to form both wired and wireless computer networks over which the computer systems and other electronic devices can transfer electronic data. Accordingly, the performance of many computing tasks is distributed across a number of different computer systems and/or a number of different computing environments, such as cloud computing environments. Cloud computing environments may comprise one or more systems that each includes one or more computing nodes (e.g., computer systems operating as servers/hosts). Each node is capable of hosting one or more virtual machines (VMs). In general, a VM provides an isolated environment within which one or more applications execute, potentially along with a supporting operating system. Each node includes an abstraction layer, such as a hypervisor, which provides one or more VMs access to physical resources of the node in an abstracted manner (e.g., by emulating virtual resources for hosted VMs), and which provides isolation between the VMs. For example, from the perspective of any given VM, a hypervisor provides the illusion that the VM is interfacing with a physical resource, even though the VM only interfaces with the appearance (e.g., a virtual resource) of a physical resource. Examples of physical resources include processing capacity (e.g., central processing unit cores), memory, disk space, network bandwidth, media drives, and so forth.

US2021/149743A1 describes a resource processing method of a cloud platform and a related computing device. The cloud platform includes a plurality of nodes, and each node includes a first resource and a second resource. The method is performed by the computing device and/or a host manager in the cloud platform, and includes: obtaining a current first resource allocation ratio and a current second resource allocation ratio of each of the plurality of nodes; obtaining a first resource limit and a second resource limit that are required by a newly added host; determining, among the plurality of modes, a target node according to the current first resource allocation ratio and the current second resource allocation ratio of each node, the first resource limit, and the second resource limit; and deploying the newly added host in the target node.

CN110493317A describes a method and device for handling cloud platform resource fragmentation. The cloud platform includes multiple nodes, and each node includes a first resource and a secondary resource. According to the current first resource apportionment ratio and current secondary resource apportionment ratio of each node, the method determines that each node is currently at one of an equilibrium of stock state, a first resource imbalance state, or a secondary resource imbalance state. The first resource distributes unbalanced storage host in the node under first resource imbalance state, migrated into the node under the secondary resource imbalance state or equilibrium of stock state.

**BRIEF SUMMARY**

The invention is set out in the appended set of claims.

Cloud computing environments are subject to fragmentation of the available resources within the nodes making up the cloud computing environment. One form of fragmentation is the stranding of node resources due to resource bottlenecks. In particular, depending on which one or more virtual machines (VMs) are allocated to a node, and depending on resource requirements of those VM(s), it is possible that one or more of the node's resources cannot be fully used and is thus "stranded." In particular, when one "bottleneck" resource is fully or nearly fully consumed by the allocated VM(s), allocations of an additional VM to the node may be blocked, causing a "stranded" resource at the node to remain unused, hence wasting that resource.

At least some embodiments described herein use measurements of node resources within a cloud computing environment to identify VM hosting nodes that have stranded resources. In embodiments, measurements include an amount of available memory at a node, a number of unallocated CPU cores or unused CPU cycles at a node, an amount of available disk space at a node, an amount of available network bandwidth at a node, and the like. These embodiments then initiate migration of one or more VMs away from these hosting nodes, thereby making these stranded resources available for VM allocations or other purposes. By doing so, the embodiments described herein automatically and proactively reduce the stranded resources within cloud computing environments. In one example, a stranded resource is a resource of a first type (e.g., memory) on a hosting node which is prevented from being used for VM deployment due to insufficient available resource of a second type (e.g., processing capacity) at the hosting node. Since deploying a VM involves using both memory and processing capacity, lack of one of these types of resource means that it is not possible to deploy a VM and the remaining available resource of the other type is "stranded." The type of resource which is insufficiently available for VM deployment is referred to as a bottleneck resource.

Technical effects of the embodiments herein include an improved efficiency of resource utilization within cloud computing environments, an increased capacity of cloud computing environments (e.g., with fewer stranded resources, a given number of nodes are able to serve an increased VM demand than otherwise possible), a lower power consumption by cloud computing environments, a lower carbon footprint for cloud computing environments, and improved reliability of cloud computing environments (e.g., through a reduction in capacity-related VM allocation failures).

In some aspects, the techniques described herein relate to a method, implemented by a computer system that includes a processor, for recovery of stranded resources within a cloud computing environment, the method including: measuring a corresponding resource utilization signal at each of a plurality of nodes that each hosts at least one corresponding VM; based on each corresponding resource utilization signal, identifying a set of candidate nodes, each candidate node including a corresponding stranded resource that is unutilized due to utilization of a corresponding bottleneck resource at the candidate node, including calculating an amount of the corresponding stranded resource at each candidate node; from a plurality of VMs hosted at the set of candidate nodes, identifying a set of candidate VMs for migration for stranded resource recovery, including calculating a score for each candidate VM based on a degree of imbalance between the corresponding stranded resource and the corresponding bottleneck resource at a candidate node hosting the candidate VM; and initiating migration of at least one candidate VM in the set of candidate VMs.

In some aspects, the techniques described herein relate to a computer system for recovery of stranded resources within a cloud computing environment, the computer system including: a processor; and a computer storage media that stores computer-executable instructions that are executable by the processor to cause the computer system to at least: measure a corresponding resource utilization signal at each of a plurality of nodes that each hosts at least one corresponding VM; based on each corresponding resource utilization signal, identify a set of candidate nodes, each candidate node including a corresponding stranded resource that is unutilized due to utilization of a corresponding bottleneck resource at the candidate node, including calculating an amount of the corresponding stranded resource at each candidate node; from a plurality of VMs hosted at the set of candidate nodes, identify a set of candidate VMs for migration for stranded resource recovery, including calculating a score for each candidate VM based on a degree of imbalance between the corresponding stranded resource and the corresponding bottleneck resource at a candidate node hosting the candidate VM; and initiate migration of at least one candidate VM in the set of candidate VMs.

In some aspects, the techniques described herein relate to a computer storage media for recovery of stranded resources within a cloud computing environment, the computer storage media storing computer-executable instructions that are executable by a processor to cause a computer system to at least: measure a corresponding resource utilization signal at each of a plurality of nodes that each hosts at least one corresponding VM; based on each corresponding resource utilization signal, identify a set of candidate nodes, each candidate node including a corresponding stranded resource that is unutilized due to utilization of a corresponding bottleneck resource at the candidate node, including calculating an amount of the corresponding stranded resource at each candidate node; from a plurality of VMs hosted at the set of candidate nodes, identify a set of candidate VMs for migration for stranded resource recovery, including calculating a score for each candidate VM based on a degree of imbalance between the corresponding stranded resource and the corresponding bottleneck resource at a candidate node hosting the candidate VM; and initiate migration of at least one candidate VM in the set of candidate VMs.

In some aspects of the techniques described herein, each corresponding resource utilization signal indicates utilization of at least one of: a memory resource, a central processing unit resource, a disk resource, a network resource, or a platform resource.

In some aspects of the techniques described herein, identifying the set of candidate nodes also includes: identifying, from the plurality of nodes, at least one first node that is included on an allow list or a block list; and excluding the at least one first node from the set of candidate nodes.

In some aspects of the techniques described herein, identifying the set of candidate nodes also includes: determining, from the plurality of nodes, at least one second node whose corresponding stranded resource is temporarily stranded; and excluding the at least one second node from the set of candidate nodes.

In some aspects of the techniques described herein, identifying the set of candidate nodes also includes sorting the set of candidate nodes based on the amount of the corresponding stranded resource at each candidate node.

In some aspects of the techniques described herein, identifying the set of candidate VMs also includes: identifying, from the plurality of VMs hosted at the set of candidate nodes, at least one first VM as being a priority VM; and excluding the at least one first VM from the set of candidate VMs.

In some aspects of the techniques described herein, identifying the set of candidate VMs also includes: identifying, from the plurality of VMs hosted at the set of candidate nodes, at least one second VM as being a short-lived VM; and excluding the at least one second VM from the set of candidate VMs.

In some aspects of the techniques described herein, identifying the set of candidate VMs also includes sorting the set of candidate VMs based on the score for each candidate VM.

In some aspects of the techniques described herein, identifying the set of candidate VMs also includes limiting a number of candidate VMs in the set of candidate VMs based on having sorted the set of candidate VMs.

In some aspects of the techniques described herein, initiating migration of at least one candidate VM in the set of candidate VMs includes selecting the at least one candidate VM for migration based on having sorted the set of candidate VMs.

In some aspects of the techniques described herein, initiating migration of at least one candidate VM in the set of candidate VMs includes migrating the at least one candidate VM from a first node of the plurality of nodes to a second node of the plurality of nodes.

In some aspects of the techniques described herein, initiating migration of at least one candidate VM in the set of candidate VMs includes delaying the migration until a node maintenance event.

Some aspects of the techniques described herein further include tracking a stranded resource metric across the plurality of nodes.

In some aspects of the techniques described herein, identifying the set of candidate nodes also includes at least one of: considering a first resource configuration of a first individual VM that is queued for allocation within the plurality of nodes; considering a second resource configuration of a second individual VM that is predicted for allocation within the plurality of nodes; considering a third resource configuration of a first set of a plurality of VMs that is queued for allocation within the plurality of nodes; or considering a fourth resource configuration of a second set of a plurality of VMs that is predicted for allocation within the plurality of nodes.

This summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

## BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1A illustrates an example of a fully exhausted memory resource as a bottleneck resource causing a stranded central processing unit (CPU) resource;

Figure 1B illustrates an example of an almost exhausted memory resource as a bottleneck resource causing stranded CPU resources;

Figure 2 illustrates an example computer architecture that facilitates automated recovery of stranded resources within a cloud computing environment;

Figure 3 illustrates an example process flow for candidate node selection;

Figure 4 illustrates an example process flow for candidate virtual machine selection; and

Figure 5 illustrates a flow chart of an example method for recovery of stranded resources within a cloud computing environment.

## DETAILED DESCRIPTION

Fragmentation is a factor that drives efficiency of cloud computing environments. Fragmentation in cloud computing environments can happen due to a myriad of reasons (e.g., due to how a virtual machine (VM) allocator allocates the various VMs into existing nodes, due to customers organically deleting VMs and leaving fragmented cores on nodes, due to platform constraints such as dedicated hosts). One way to mitigate fragmentation in cloud computing environments is to migrate VMs between nodes, in order to pack those VMs into fewer nodes and create empty nodes onto which new VMs can be allocated.

The inventors have recognized that one mode in which fragmentation manifests in cloud computing environments is via stranding of node resources. Each node has a specific configuration of available resources, such as central processing unit (CPU) cores, memory resources, disk resources, and the like. Additionally, some VMs may have a corresponding requirement for those resources. For example, a VM may need to be allocated a certain number of CPU cores, a certain amount of memory, a certain amount of disk space or input/output (IO) bandwidth, etc. Thus, depending on which VM (or VMs) are allocated to a particular node, it is possible that one or more of the node's resources cannot be fully utilized because one or more bottleneck resources block further allocations of VMs to the node, which strands one or more unused or unallocated resources at the node.

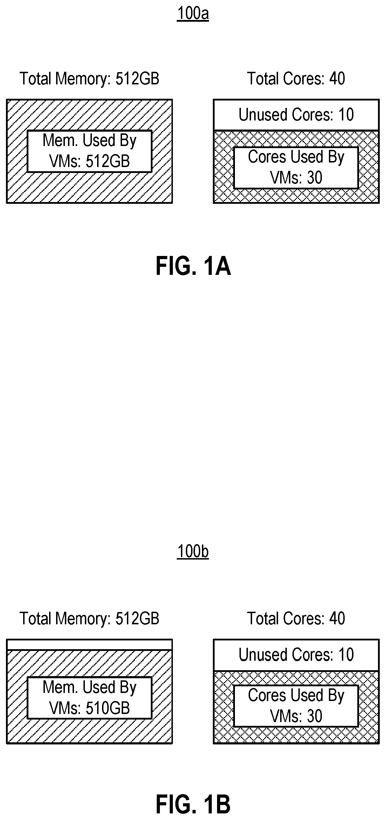

In one example, one or more VMs with relatively high required memory-to-cores ratios are allocated to a node, which fully utilizes the memory on the node while leaving unused CPU cores on the node. Figure 1A, for example, illustrates an example 100a of a fully exhausted memory resource as a bottleneck resource causing a stranded CPU resource. In particular, example 100a shows a node that has 512GB of total memory, with this memory being fully utilized by VMs hosted at the node. However, the node also has 40 CPU cores, and only 30 of those cores are utilized by the VMs hosted at the node. In this case, memory is a bottleneck resource that prevents the node from accepting more VMs, and the unused CPU cores are therefore rendered "stranded." Notably, a resource need not be fully exhausted to be a bottleneck resource. Figure 1B, for example, illustrates an example 100b of an almost exhausted memory resource as a bottleneck resource causing stranded CPU resources. In particular, example 100b shows a node that has 512GB of total memory and 40 CPU cores, with 2GB of unallocated memory and 10 unallocated cores. Here, even though the node's memory is not fully utilized, the remaining memory may be insufficient to enable allocation of an additional VM at the node (e.g., the smallest memory needed by any VM is 8GB), leading to stranded CPU cores.

In another example, one or more VMs allocated to a node fully utilize the CPU cores of the node and unused memory is rendered stranded. The resources on a node may also be stranded due to certain platform constraints. For example, there may be a platform limit on the number of VMs that can be hosted on a given node, and it is possible that a node may be hosting the maximum number of allowed VMs-stranding unused CPU cores, memory, disk space, etc.

At least some embodiments described herein use measurements of node resources within a cloud computing environment to identify VM hosting nodes that have stranded resources. These embodiments then initiate migration of VMs causing resource bottlenecks away from those hosting nodes, thereby making previously stranded resources available for VM allocations or other purposes. By doing so, the embodiments described herein automatically and proactively reduce the stranded resources within cloud computing environments.

As such, the embodiments herein improve the efficiency of resource utilization within cloud computing environments. Since the stranded resources effectively lead to lowering the available capacity of a given set of nodes within a cloud computing environment, the improved resource utilization efficiency enabled by the embodiments herein leads to an overall capacity increase of the cloud computing environment, enabling a fewer number of nodes to serve a given VM demand. This leads to lower power consumption by the cloud computing environment, and a lower carbon footprint for the cloud computing environment. Additionally, in some cases, stranding of resources can cause capacity-related VM allocation failures. Thus, the improved resource utilization efficiency enabled by the embodiments herein can improve reliability of the cloud computing environment.

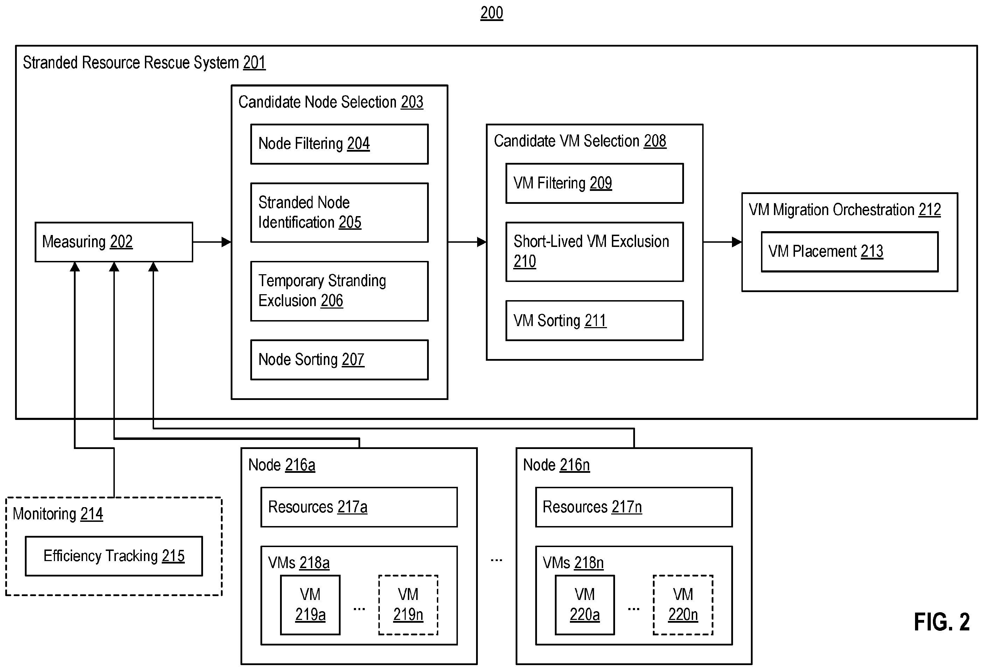

Figure 2 illustrates an example computer architecture 200 that facilitates automated recovery of stranded resources within a cloud computing environment. As shown, computer architecture 200 includes a stranded resource rescue system 201 (rescue system 201) that recovers stranded resources within a plurality of nodes 216 (i.e., node 216a to node 216n) of one or more cloud computing environments (e.g., one or more datacenters). Each of nodes 216 includes resources 217 (i.e., resources 217a in node 216a, resources 217n in node 216n, etc.). In embodiments, resources 217 comprise memory resources, CPU resources (e.g., CPU cores), disk resources (e.g., storage and I/O), network resources, and the like. Additionally, each of nodes 216 is a VM hosting node that hosts one or more VMs 218 (i.e., VMs 218a hosted by node 216a, including VM 219a to VM 219n; VMs 218n hosted by node 216n, including VM 220a to VM 220n; etc.). Although not illustrated, in embodiments the nodes 216 are logically arranged into different clusters of nodes that are at least partially managed as a group.

As used herein, a "virtual machine" (VM) is any isolated execution environment, such as an emulated execution environment created by an emulator (e.g., BOCHS, QEMU), a virtualized execution environment created by a hypervisor (e.g., HYPER-V, XEN, KVM), a user-space instance (e.g., container, zone, partition, jail) created via OS-level virtualization, and the like.

In embodiments, the rescue system 201 uses measurements of resource utilization at the nodes 216 to proactively identify and recover stranded resources among the resources 217 of the nodes 216. As non-limiting examples only, in one embodiment the rescue system 201 rescues stranded CPU cores on one or more of nodes 216 where the VMs 218 hosted at those nodes have utilized all or almost all the node's memory; in another embodiment the rescue system 201 rescues stranded memory on a node where the VMs 218 hosted at those nodes have utilized all or almost all the node's CPU cores; in another embodiment the rescue system 201 rescues stranded CPU cores on a node where the VMs 218 hosted at those nodes have hit or approached a limit on a maximum number of VMs that a cloud computing environment can support on a given node; and in another embodiment the rescue system 201 rescues stranded CPU cores where the VMs 218 hosted at those nodes have utilized all or almost all the node's available disk space.

In embodiments, the rescue system 201 operates in a fully- or semi-automatic manner, such as through a cloud or datacenter management fabric. For instance, in one embodiment the rescue system 201 operates continuously in the background and has configurable settings to run live migrations, such as a live migration on N nodes every M minutes.

As mentioned, the rescue system 201 uses measurements of resource utilization at the nodes 216. Thus, as shown, the rescue system 201 includes a measuring component 202 that collects signals regarding utilization of resources 217 at the nodes 216. In some embodiments, the measuring component 202 actively (e.g., via probing of the nodes 216) or passively (e.g., via listening to signal emitted by the nodes 216) collects these signals by directly communicating with each of nodes 216. In additional, or alternative, embodiments, the measuring component 202 collects these signals indirectly via a monitoring component 214 which, in embodiments, monitors overall stranded resources across one or more cloud computing environments. In embodiments, measurements include information sufficient to determine an amount of available memory at a node, a number of unallocated CPU cores or unused CPU cycles at a node, an amount of available disk space at a node, an amount of available network bandwidth at a node, and the like.

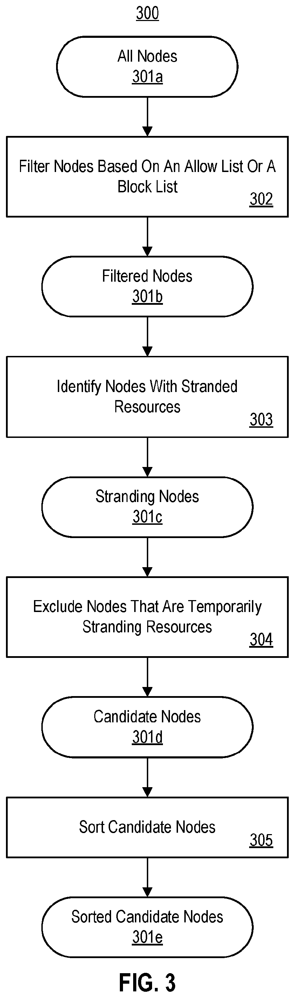

Based on the signals measured by the measuring component 202, the rescue system 201 uses a candidate node selection component 203 to intelligently identify one or more nodes of the nodes 216 that currently have one or more stranded resources that are unutilized due to utilization of a corresponding bottleneck resource at the node. In embodiments, a stranded resource is stranded by utilization of a corresponding bottleneck resource due to the bottleneck resource being fully utilized (i.e., exhausted) at the node, such as in Figure 1A where a fully exhausted memory resource creates a stranded CPU resource. In embodiments, a stranded resource is stranded by utilization of a corresponding bottleneck resource due to the bottleneck resource being almost fully utilized (e.g., 70% utilized, 90% utilized, etc.) at the node, such as in Figure 1B where an almost exhausted memory resource creates a stranded CPU resource. These nodes become a set of candidate nodes, from which one or more VMs are subsequently migrated in order to rescue those stranded resources. Example operation of the candidate node selection component 203 is now described in reference to Figure 3, which illustrates an example process flow 300 for candidate node selection.

In some embodiments, the candidate node selection component 203 includes a node filtering component 204. In embodiments, the node filtering component 204 excludes one or more of nodes 216 from further consideration by the candidate node selection component 203. For instance, the candidate node selection component 203 may operate to exclude certain nodes from further consideration due to platform constraints. In one example, the node filtering component 204 excludes any of nodes 216 that are not identified from an allow list, and in another example the node filtering component 204 excludes any of nodes 216 that are identified from a block list. In some embodiments, the node filtering component 204 operates at a cluster level, to exclude clusters of a plurality of nodes from further consideration by the candidate node selection component 203. Thus, in embodiments, an allow or a block list refers to nodes directly, and/or to clusters of nodes.

Referring to process flow 300, after operation of the node filtering component 204 at step 302 (filter nodes based on an allow list or a block list), a set 301a of all nodes (e.g., nodes 216) becomes a set 301b of filtered nodes. It will be appreciated that, in some embodiments, the node filtering component 204 is excluded from the node selection component 203, and/or step 302 is omitted from process flow 300.

The candidate node selection component 203 also includes a stranded node identification component 205. In embodiments, the stranded node identification component 205 applies one or more rules or heuristics to signals gathered by the measuring component 202 to determine if one or more of nodes 216 have one or more stranded resources. In one example, the stranded node identification component 205 identifies resource A (a stranded resource) as being stranded by resource B (a bottleneck resource) on a particular node when the following evaluates to true:

$$((1 - \mathit{Utilization\_of\_B}) * \mathit{Stranding\_Ratio}) < (1 - \mathit{Utilization\_of\_A})\ \&\&\ (\mathit{Utilization\_of\_A} < \mathit{Stranding\_Threshold})$$

where:

- $\mathit{Utilization\_of\_A}$ is the used portion of resource A as percent of total resource A on the node,
- $\mathit{Utilization\_of\_B}$ is the used portion of resource B as percent of total resource B on the node,
- $\mathit{Stranding\_Ratio}$ is a parameter greater than 1 (e.g., 8), and
- $\mathit{Stranding\_Threshold}$ is a parameter between 0 and 1 (e.g., 0.9).

In embodiments, if the stranded node identification component 205 identifies resource A as a stranded resource on a node, then the stranded node identification component 205 calculates an amount of the resource stranded on the node as follows:

$$1 - \mathit{Utilization\_of\_A}$$

In a particular, for inferring if a node has stranded CPU cores due to memory being full, signals indicating CPU cores utilization and memory utilization on the node can be used to consider the node as stranding cores due to memory full if the below quantity evaluates to true:

$$((1 - \mathit{MemoryUtilization}) * 8) < (1 - \mathit{CoresUtilization})\ \&\&\ (\mathit{CoresUtilization} < 0.9)$$

where:

- *MemoryUtilization* is the node's used memory as percent of total memory on the node, and
- *CoresUtilization* is the node's used CPU cores as percent of total CPU cores on the node.

In embodiments, when determining if one or more of nodes 216 have one or more stranded resources, the stranded node identification component 205 considers attributes of one or more VMs that are, or that could be, allocated one or more of nodes 216. In one example, the stranded node identification component 205 considers an available VM template definition that defines, e.g., an amount of memory, a number of CPU cores, etc. required for a VM instantiated based on the VM template definition. In another example, the stranded node identification component 205 considers a set of potential VMs that are valid to place on one or more of nodes 216 (e.g., due to policy, contractual, security, or other reasons). In another example, the stranded node identification component 205 considers current set of VMs (including the resources required by those VMs) that are queued for placement. In another example, the stranded node identification component 205 considers a predicted set of VMs that will need to be generated in an upcoming time period (e.g., hour, N hours, etc.). In embodiments, the stranded node identification component 205 considers combinations of one or more of the foregoing.

In embodiments, the stranded node identification component 205 considers a plurality of VMs as a set, in addition to (or rather than) individually. In one example, the stranded node identification component 205 operates to identify a resource as being stranded when it prevents allocation of the set of VMs as a whole, even if that resource may be sufficient to enable allocation of one of the VMs of the set individually. In another example, the stranded node identification component 205 operates to identify a resource as being stranded when there is a customer requirement to only run the plurality of VMs on the same physical machine (e.g., due to high security or classification).

Referring to process flow 300, after operation of the candidate node selection component 203 at step 303 (identify nodes with stranded resources), the set 301b of filtered nodes becomes a set 301c of stranding nodes.

In some embodiments, the candidate node selection component 203 also includes a temporary stranding exclusion component 206. In embodiments, the temporary stranding exclusion component 206 excludes one or more nodes that are only temporarily stranding resources. For example, the temporary stranding exclusion component 206 may only consider a node to be a stranding node when the majority of VMs hosted on node are considered as "long running" VMs (e.g., having already run longer than a predetermined number of minutes, hours, days, etc.). Thus, the temporary stranding exclusion component 206 excludes a node if a majority of VMs at the node are considered to be short-lived (i.e., not long running). In some embodiments, the temporary stranding exclusion component 206 applies the following rule to check whether the "majority" rule is satisfied for a node:

$$Utilization\_of\_Bottleneck\_Resource\_Used\_by\_long\_running\_VMs >= Majority\_Threshold$$

where:

- *Utilization_of_Bottleneck_Resource_Used_by_long_running_VMs* is the amount of bottleneck resource used by all long running VMs as percent of the total amount of bottleneck resource on the node, and
- *Majority_Threshold* is a percentage parameter (e.g., 75%).

Referring to process flow 300, after operation of the temporary stranding exclusion component 206 at step 304 (exclude nodes that are temporarily stranding resources), the set 301c of stranding nodes becomes a set 301d of candidate nodes. It will be appreciated that, in some embodiments, the temporary stranding exclusion component 206 is excluded from the node selection component 203, and/or step 304 is omitted from process flow 300.

In some embodiments, the candidate node selection component 203 also includes a node sorting component 207. In embodiments, the node sorting component 207 sorts the set of candidate nodes by an amount of resource stranded at each node. In embodiments, the node sorting component 207 sorts the set of candidate nodes in descending order (i.e., to create an ordered set of candidate nodes), such that the node sorting component 207 sorts a first node with a higher amount of stranded resource prior to (or higher than) a second node with a lower amount of stranded resource. As a result of this sorting, the first node is given higher priority for VM migration than the second node.

Referring to process flow 300, after operation of the node sorting component 207 at step 305 (sort candidate nodes), the set 301d of candidate nodes becomes a set 301e of sorted candidate nodes. It will be appreciated that, in some embodiments, the node sorting component 207 is excluded from the candidate node selection component 203 and/or step 305 is omitted from process flow 300.

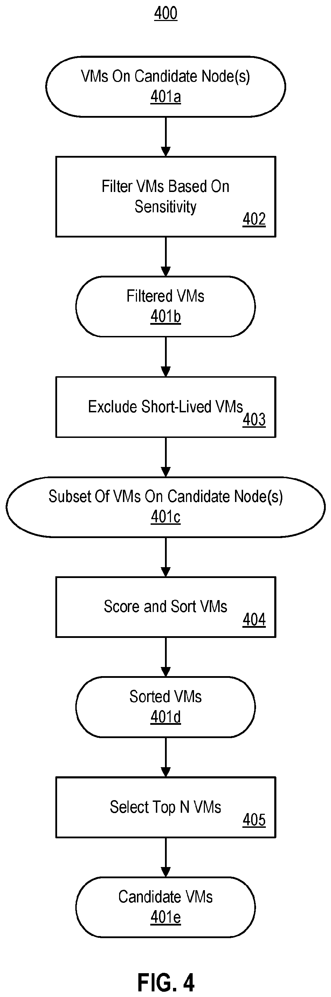

Based on the set of candidate nodes (e.g., set 301d) identified by the candidate node selection component 203, the rescue system 201 uses a candidate VM selection component 208 to intelligently identify one or more "bottleneck" VMs on those candidate nodes that can be migrated from those candidate nodes in order to rescue stranded resources. These VMs become a set of candidate VMs, at least one of which is subsequently migrated from its respective candidate node in order to rescue stranded resources at that node. Example operation of the candidate VM selection component 208 is now described in reference to Figure 4, which illustrates an example process flow 400 for candidate VM selection. In various embodiments, process flow 400 is applied to all nodes in a set of candidate nodes (e.g., set 301d) at once, or is applied to each node in the set of candidate nodes individually.

In some embodiments, the candidate VM selection component 208 includes a VM filtering component 209. In embodiments, the VM filtering component 209 excludes one or more VMs hosted by the candidate node(s) from being selected as candidates for migration based on one or more filtering criteria. The criteria used by the VM filtering component 209 can vary, but in embodiments, the VM filtering component 209 excludes VMs that are considered to be sensitive, such as based on a type of workload executed on those VMs (e.g., which may be adversely affected by a VM migration), based on a service-level agreement with a customer to whom the VMs is associated, etc.

Referring to process flow 400, after operation of the VM filtering component 209 at step 402 (filter VMs based on sensitivity), a set 401a of VMs on candidate node(s) becomes a set 401b of filtered VMs. It will be appreciated that, in some embodiments, the VM filtering component 209 is excluded from the candidate VM selection component 208 and/or step 402 is omitted from process flow 400.

In some embodiments, the candidate VM selection component 208 also includes a short-lived VM exclusion component 210. In embodiments, the short-lived VM exclusion component 210 excludes one or more VMs that are short-lived from being candidates for migration. For example, the short-lived VM exclusion component 210 may consider a VM to be short-lived if it has been running for less than a predetermined number of minutes, hours, days, etc. In embodiments, exclusion of short-lived VMs from migration reduces the downtime for short-lived VMs that might be otherwise organically deleted by the VM's owner.

Referring to process flow 400, after operation of the short-lived VM exclusion component 210 at step 403 (exclude short-lived VMs), the set 401b of filtered VMs becomes a set 401c of a subset of VMs on candidate node(s). It will be appreciated that, in some embodiments, the short-lived VM exclusion component 210 is excluded from the candidate VM selection component 208 and/or step 403 is omitted from process flow 400.

In some embodiments, the candidate VM selection component 208 also includes a VM sorting component 211. In embodiments, the VM sorting component 211 scores one or more sets of candidate VMs based on a scoring function. In an example, the VM sorting component 211 uses a scoring function that measures a degree of imbalance between a stranded resource at the node and a bottleneck resource used by at least one VM at the node. This measurement quantifies the contribution of individual VMs to causing the stranding of the stranded resource on the node. For example, for a scenario where one or more of a node's CPU cores are stranded due to the node's memory being full, the migration of a VM whose memory utilization exceeds the CPU core utilization at a greater level than another VM has the strongest effect in rescuing the stranded CPU core(s). In embodiments, this scoring function is defined as:

$$Utilization\_of\_Bottleneck\_Resource - Utilization\_of\_Stranded\_Resource$$

where:

- *Utilization_of_Bottleneck_Resource* is the used bottleneck resource by each VM as percentage of total "bottleneck resource" on the node, and
- *Utilization_of_Stranded_Resource* is the used stranded resource by each VM as percentage of total "stranded resource" on the node.

In embodiments, the VM sorting component 211 also sorts the VMs in descending order based on each VM's score. In some embodiments, the VM sorting component 211 sorts VMs across all candidate nodes. In other embodiments, the VM sorting component 211 sorts VMs at each candidate node. Referring to process flow 400, after operation of the VM sorting component 211 at step 404 (score and sort VMs), the set 401c of a subset of VMs on candidate node(s) becomes a set 401d of sorted VMs.

In embodiments, the VM sorting component 211 also selects the N highest scored VMs (with positive values) as a set of candidate VMs for migration. Referring to process flow 400, after operation of the VM sorting component 211 at step 404 (select top N VMs), a set 401d of sorted VMs becomes a set 401e of candidate VMs (e.g., at a particular node, or across all candidate nodes). It will be appreciated that, in some embodiments, the VM sorting component 211 is excluded from the candidate VM selection component 208 and/or one or more of step 404 or step 405 is omitted from process flow 400.

Based on the set of VMs (e.g., set 401e) identified by the candidate VM selection component 208, the rescue system 201 uses a VM migration orchestration component 212 to determine at least one of the candidate VMs that is to be migrated away from its hosting node. In embodiments, the VM migration orchestration component 212 initiates that migration using a VM placement component 213. In embodiments, the VM migration orchestration component 212 prioritizes migration of VMs based on the sorted order created by the VM sorting component 211.

In some embodiments, the VM migration orchestration component 212 delays migrations until node maintenance events (e.g., operating system updates, node reboots, etc.) in order to opportunistically piggyback on those maintenance events to achieve rescue of stranded resources, while not causing an additional VM downtime than would otherwise be incurred by the maintenance.

In some embodiments, the VM migration orchestration component 212 includes a configurable safeguard that ensures that there is a maximum number of parallelly executing VM migrations per cluster at any given time.

As mentioned, in some embodiments the measuring component 202 collects signals regarding resource utilization at the nodes 216 indirectly via a monitoring component 214, and that the monitoring component 214, monitors overall stranded resources across one or more cloud computing environments. As shown, in embodiments, the monitoring component 214 also includes an efficiency tracking component 215. In embodiments the efficiency tracking component 215 tracks resource utilization efficiency among at least the nodes 216 of computer architecture 200, such as by tracking a percentage of stranded resources across the nodes 216. In embodiments, the monitoring component 214 communicates resource utilization efficiency information to the rescue system 201, and the rescue system 201 uses this information to ensure that the nodes 216 are operating within target stranded resource limits.

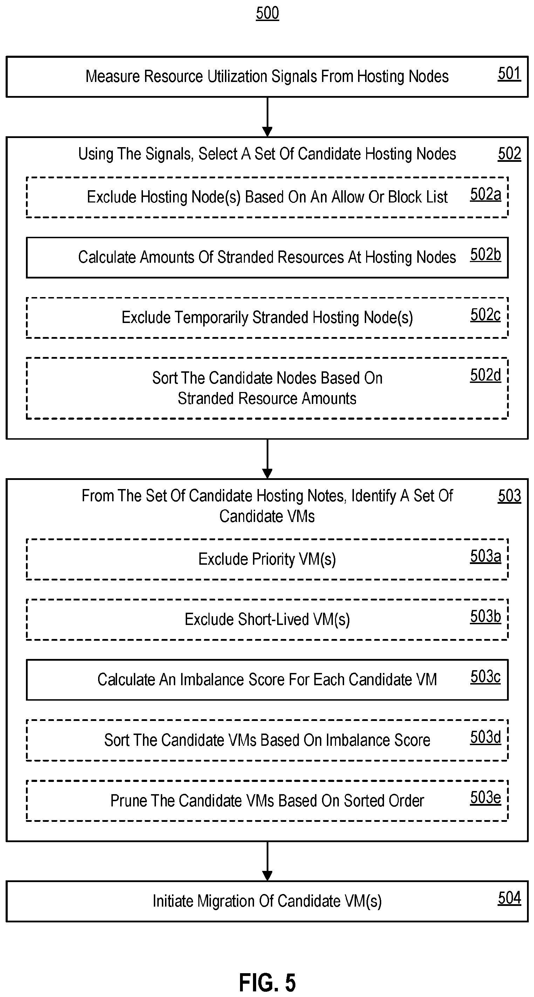

A further description of the computer architecture 200 is now provided in connection with Figure 5, which illustrates a flow chart of an example method 500 for recovery of stranded resources within a cloud computing environment. In embodiments, instructions for implementing method 500 are encoded as computer-executable instructions stored on a computer program product (e.g., a computer storage media) that are executable by a processor to cause a computer system (e.g., rescue system 201) to perform method 500.

The following discussion now refers to a number of methods and method acts. Although the method acts may be discussed in certain orders, or may be illustrated in a flow chart as occurring in a particular order, no particular ordering is required unless specifically stated, or required because an act is dependent on another act being completed prior to the act being performed.

Referring to Figure 5, in embodiments, method 500 comprises an act 501 of measuring resource utilization signals from hosting nodes. In some embodiments, act 501 comprises measuring a corresponding resource utilization signal at each of a plurality of nodes within a cloud computing environment that each hosts at least one corresponding VM. In an example, the measuring component 202 collects signals regarding utilization of resources 217 at the nodes 216, either directly or via the monitoring component 214. In embodiments, each corresponding resource utilization signal indicates utilization of at least one of a memory resource, a CPU resource, a disk resource, a network resource, or a platform resource. In embodiments, a platform resource is an exhaustible non-physical resource provided by a platform supporting operation of VMs (e.g., the cloud computing environment, a node, software running on the node, etc.). In one example, a platform resource is a maximum number of VMs that can be concurrently operated on any single node.

Referring to Figure 5, in embodiments, method 500 comprises an act 502 of, using the signals identified in act 501, selecting a set of candidate hosting nodes. In some embodiments, act 502 comprises, based on each corresponding resource utilization signal, identifying a set of candidate nodes, each candidate node comprising a corresponding stranded resource that is unutilized due to utilization of a corresponding bottleneck resource at the candidate node. In an example, the candidate node selection component 203 identifies, as the set of candidate nodes (e.g., one of set 301c, set 301d, or set 301e), one or more of nodes 216 that currently have resources that are stranded by bottleneck resources at those nodes.

Referring to Figure 5, in some embodiments, act 502 includes and act 502a of excluding hosting node(s) based on an allow or block list. In some embodiments, act 502a comprises identifying, from the plurality of nodes, at least one first node that is included on an allow list or a block list, and excluding the at least one first node from the set of candidate nodes. In an example, the node filtering component 204 excludes one or more of nodes 216 from further consideration by the node selection component 203 (see, e.g., step 302 of process flow 300). In embodiments, this includes the node filtering component 204 excluding one or more nodes based on an allow list (e.g., by excluding any of nodes 216 that are not identified from the allow list), or based on a block list (e.g., by excluding any of nodes 216 that are identified from the block list). Technical effects of act 502a include reducing a search space of further analysis by the node selection component 203, and enabling identified nodes to be excluded from operation of method 500 (e.g., to avoid VM disruptions on those nodes).

Referring to Figure 5, in embodiments, act 502 includes and act 502b of calculating amounts of stranded resources at hosting nodes. In some embodiments, act 502b comprises calculating an amount of the corresponding stranded resource at each candidate node. In an example, the stranded node identification component 205 applies one or more rules or heuristics to signals gathered by the measuring component 202 in act 501 to determine if one or more of nodes 216 have one or more stranded resources (see, e.g., step 303 of process flow 300). Technical effects of act 502b include both identification of nodes that contain stranded resources, as well as quantifying a number of stranded resources at those nodes.

Referring to Figure 5, in some embodiments, act 502 includes and act 502c of excluding temporarily stranded hosting node(s). In some embodiments, act 502c comprises determining, from the plurality of nodes, at least one second node whose corresponding stranded resource is temporarily stranded, and excluding the at least one second node from the set of candidate nodes. In an example, the temporary stranding exclusion component 206 excludes one or more nodes that are only temporarily stranding resources, such as by excluding nodes having a majority of VMs that are considered to be short-lived (see, e.g., step 304 of process flow 300). Technical effects of act 502c include avoiding performing VM migrations prematurely on nodes that have a majority of VMs that may be organically removed by their owner.

Referring to Figure 5, in some embodiments, act 502 includes and act 502d of sorting the candidate nodes based on stranded resource amounts. In some embodiments, act 502d comprises sorting the set of candidate nodes based on the amount of the corresponding stranded resource at each candidate node. In an example, the node sorting component 207 sorts the set of candidate nodes by an amount of resource stranded at each node, such as by sorting the node in descending order based on the amounts calculated for each node in act 502b (see, e.g., step 305 of process flow 300). Technical effects of act 502d include producing an ordered set of candidate nodes, which can be used to prioritize VM migrations (e.g., by migrating VMs away from nodes having larger amounts of stranded resources first).

As mentioned, in embodiments, the stranded node identification component 205 considers attributes of one or more VMs that are, or that could be, allocated one or more of nodes 216. As mentioned this can include considering a plurality of VMs as a set, in addition to (or rather than) individually. Thus, in some embodiments of act 502, identifying the set of candidate nodes also includes at least one of considering a first resource configuration of a first individual VM that is queued for allocation within the plurality of nodes, considering a second resource configuration of a second individual VM that is predicted for allocation within the plurality of nodes; considering a third resource configuration of a first set of a plurality of VMs that is queued for allocation within the plurality of nodes; or considering a fourth resource configuration of a second set of a plurality of VMs that is predicted for allocation within the plurality of nodes.

It is noted that, in act 502, there is no particular ordering shown among act 502a, act 502b, act 502c, and act 502d. Thus, the description herein does not impose any particular ordering among these acts. Additionally, as indicated by broken lines, some of these acts may be optional.

Referring to Figure 5, in embodiments, method 500 comprises an act 503 of, from the set of candidate hosting notes, identifying a set of candidate VMs. In some embodiments, act 503 comprises, from a plurality of VMs hosted at the set of candidate nodes, identifying a set of candidate VMs for migration for stranded resource recovery. In an example, the candidate VM selection component 208 identifies, as the set of candidate VMs (e.g., one of set 401a, set 401b, set 401c, set 401d, or set 401e), one or more VMs among the set of candidate nodes identified in act 502.

In some embodiments of act 503, the candidate VM selection component 208 selects a different set of candidate VMs for each candidate node in the set of candidate nodes. In other embodiments of act 503, the candidate VM selection component 208 selects a single set of candidate VMs across the set of candidate nodes.

Referring to Figure 5, in some embodiments, act 503 includes and act 503a of excluding priority VM(s). In some embodiments, act 503a comprises identifying, from the plurality of VMs hosted at the set of candidate nodes, at least one first VM as being a priority VM, and excluding the at least one first VM from the set of candidate VMs. In an example, the VM filtering component 209 excludes one or more VMs hosted by the candidate node(s) from being selected as candidates for migration based on a sensitivity of those VMs (see, e.g., step 402 of process flow 400). Technical effects of act 503a include reducing a search space of further analysis by the act 503, and enabling sensitive VMs to be excluded from operation of method 500 (e.g., to avoid disruptions to those VMs).

Referring to Figure 5, in some embodiments, act 503 includes and act 503b of excluding short-lived VM(s). In some embodiments, act 503b comprises identifying, from the plurality of VMs hosted at the set of candidate nodes, at least one second VM as being a short-lived VM, and excluding the at least one second VM from the set of candidate VMs. In an example, the short-lived VM exclusion component 210 excludes one or more VMs that are short-lived from being candidates for migration (see, e.g., step 403 of process flow 400). Technical effects of act 503b include avoiding performing migrations prematurely on VMs that may be organically removed by their owner.

Referring to Figure 5, in embodiments, act 503 includes and act 503c of calculating an imbalance score for each candidate VM. In some embodiments, act 503c comprises calculating a score for each candidate VM based on a degree of imbalance between the corresponding stranded resource and the corresponding bottleneck resource at a candidate node hosting the candidate VM. In an example, the VM sorting component 211 applies a scoring function to each VM, in order to quantify the contribution of each individual VM to causing the stranding of a stranded resource on a node (see, e.g., step 404 of process flow 400). Technical effects of act 503c include quantifying an effect that individual VMs have on stranded resources.

Referring to Figure 5, in some embodiments, act 503 includes and act 503d of sorting the candidate VMs based on imbalance score. In some embodiments, act 503d comprises sorting the set of candidate VMs based on the score for each candidate VM. In an example, the VM sorting component 211 sorts the VMs at a node (or across all candidate nodes) in based each VM's score (see, e.g., step 404 of process flow 400). Technical effects of act 503d include producing an ordered set of candidate VMs, which can be used to prioritize VM migrations (e.g., by migrating VMs having a larger effect on stranded resources first).

Referring to Figure 5, in some embodiments, act 503 includes and act 503e of pruning the candidate VMs based on sorted order. In some embodiments, act 503e comprises limiting a number of candidate VMs in the set of candidate VMs based on having sorted the set of candidate VMs. In an example, the VM sorting component 211 selects the N highest scored VMs as the set of candidate VMs for migration (see, e.g., step 405 of process flow 400). Technical effects of act 503e include applying a limit to a number of VMs that are candidates for migration, which reduces a number of VM disruptions.

It is noted that, in act 503, there is no particular ordering shown among act 503a, act 503b, act 503c, act 503d, and act 503e. Thus, the description herein does not impose any particular ordering among these acts. Additionally, as indicated by broken lines, some of these acts may be optional.

Referring to Figure 5, in embodiments, method 500 comprises an act 504 of initiating migration of candidate VM(s). In some embodiments, act 504 comprises initiating migration of at least one candidate VM in the set of candidate VMs. In an example, the VM migration orchestration component 212 initiates migration of at least one of the candidate VMs identified in act 503 away from its candidate node. For example, in embodiments initiating migration of at least one candidate VM in the set of candidate VMs includes migrating the at least one candidate VM from a first node of the plurality of nodes to a second node of the plurality of nodes. Technical effects of act 504 include recovering stranded resources at any node from which a VM is migrated (e.g., the first node).

As mentioned, some embodiments of method 500 include sorting candidate VMs based on imbalance score (act 503d). Thus, in some embodiments of act 504, initiating migration of at least one candidate VM in the set of candidate VMs includes selecting the at least one candidate VM for migration based on having sorted the set of candidate VMs.

As mentioned, in some embodiments, the VM migration orchestration component 212 delays migrations until node maintenance events (e.g., operating system updates, node reboots, etc.) in order to opportunistically piggybacking on those maintenance events. Thus, in some embodiments of act 504, initiating migration of at least one candidate VM in the set of candidate VMs includes delaying the migration until a node maintenance event.

As mentioned, in some embodiments an efficiency tracking component 215 tracks resource utilization efficiency among nodes 216, and the rescue system 201 uses this information to ensure that the nodes 216 are operating within target stranded resource limits. Thus, some embodiments of method 500 also include tracking a stranded resource metric across the plurality of nodes.

Accordingly, the embodiments described herein use measurements of node resources within a cloud computing environment to identify VM hosting nodes that have stranded resources, and then initiate migration of VMs causing resource bottlenecks away from these hosting nodes-thereby making these stranded resources available for VM allocations or other purposes. By doing so, the embodiments described herein automatically and proactively reduce the stranded resources within cloud computing environments.

Although the subject matter has been described in language specific to structural features and/or methodological acts, it is to be understood that the subject matter defined in the appended claims is not necessarily limited to the described features or acts described above, or the order of the acts described above. Rather, the described features and acts are disclosed as example forms of implementing the claims.

Embodiments of the present invention may comprise or utilize a special-purpose or general-purpose computer system that includes computer hardware, such as, for example, one or more processors and system memory, as discussed in greater detail below. Embodiments within the scope of the present invention also include physical and other computer-readable media for carrying or storing computer-executable instructions and/or data structures. Such computer-readable media can be any available media that can be accessed by a general-purpose or special-purpose computer system. Computer-readable media that store computer-executable instructions and/or data structures are computer storage media. Computer-readable media that carry computer-executable instructions and/or data structures are transmission media. Thus, by way of example, and not limitation, embodiments of the invention can comprise at least two distinctly different kinds of computer-readable media: computer storage media and transmission media.

Computer storage media are physical (i.e., hardware) storage media that store computer-executable instructions and/or data structures. Physical storage media include computer hardware, such as RAM, ROM, EEPROM, solid state drives ("SSDs"), flash memory, phase-change memory ("PCM"), optical disk storage, magnetic disk storage or other magnetic storage devices, or any other hardware storage device(s) which can be used to store program code in the form of computer-executable instructions or data structures, which can be accessed and executed by a general-purpose or special-purpose computer system to implement the disclosed functionality of the invention.

Transmission media can include a network and/or data links which can be used to carry program code in the form of computer-executable instructions or data structures, and which can be accessed by a general-purpose or special-purpose computer system. A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer system, the computer system may view the connection as transmission media. Combinations of the above should also be included within the scope of computer-readable media.

Further, upon reaching various computer system components, program code in the form of computer-executable instructions or data structures can be transferred automatically from transmission media to computer storage media (or vice versa). For example, computer-executable instructions or data structures received over a network or data link can be buffered in RAM within a network interface module (e.g., a "NIC"), and then eventually transferred to computer system RAM and/or to less volatile computer storage media at a computer system. Thus, it should be understood that computer storage media can be included in computer system components that also (or even primarily) utilize transmission media.

Computer-executable instructions comprise, for example, instructions and data which, when executed at one or more processors, cause a general-purpose computer system, special-purpose computer system, or special-purpose processing device to perform a certain function or group of functions. Computer-executable instructions may be, for example, binaries, intermediate format instructions such as assembly language, or even source code.

Those skilled in the art will appreciate that the invention may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The invention may also be practiced in distributed system environments where local and remote computer systems, which are linked (either by hardwired data links, wireless data links, or by a combination of hardwired and wireless data links) through a network, both perform tasks. As such, in a distributed system environment, a computer system may include a plurality of constituent computer systems. In a distributed system environment, program modules may be located in both local and remote memory storage devices.

Those skilled in the art will also appreciate that the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources (e.g., networks, servers/nodes, storage, applications, and services). The definition of "cloud computing" is not limited to any of the other numerous advantages that can be obtained from such a model when properly deployed.

A cloud computing model can be composed of various characteristics, such as on-demand self-service, broad network access, resource pooling, rapid elasticity, measured service, and so forth. A cloud computing model may also come in the form of various service models such as, for example, Software as a Service ("SaaS"), Platform as a Service ("PaaS"), and Infrastructure as a Service ("IaaS"). The cloud computing model may also be deployed using different deployment models such as private cloud, community cloud, public cloud, hybrid cloud, and so forth.

Some embodiments, such as a cloud computing environment, may comprise a system that includes one or more hosts that are each capable of running one or more virtual machines. During operation, virtual machines emulate an operational computing system, supporting an operating system and perhaps one or more other applications as well. In some embodiments, each host includes a hypervisor that emulates virtual resources for the virtual machines using physical resources that are abstracted from view of the virtual machines. The hypervisor also provides proper isolation between the virtual machines. Thus, from the perspective of any given virtual machine, the hypervisor provides the illusion that the virtual machine is interfacing with a physical resource, even though the virtual machine only interfaces with the appearance (e.g., a virtual resource) of a physical resource. Examples of physical resources including processing capacity, memory, disk space, network bandwidth, media drives, and so forth.

The present invention may be embodied in other specific forms without departing from its essential characteristics. Such embodiments may include a data processing device comprising means for carrying out one or more of the methods described herein; a computer program comprising instructions which, when the program is executed by a computer, cause the computer to carry out one or more of the methods described herein; and/or a computer-readable medium (computer storage media) comprising instructions which, when executed by a computer, cause the computer to carry out one or more of the methods described herein. The described embodiments are to be considered in all respects only as illustrative and not restrictive. The scope of the invention is, therefore, indicated by the appended claims rather than by the foregoing description. When introducing elements in the appended claims, the articles "a," "an," "the," and "said" are intended to mean there are one or more of the elements. The terms "comprising," "including," and "having" are intended to be inclusive and mean that there may be additional elements other than the listed elements. Unless otherwise specified, the terms "set," "superset," and "subset" are intended to exclude an empty set, and thus "set" is defined as a non-empty set, "superset" is defined as a non-empty superset, and "subset" is defined as a non-empty subset. Unless otherwise specified, the term "subset" excludes the entirety of its superset (i.e., the superset contains at least one item not included in the subset). Unless otherwise specified, a "superset" can include at least one additional element, and a "subset" can exclude at least one element.

## Claims

1. A method (500), implemented by a computer system (201) that includes a processor, for recovery of stranded resources within a cloud computing environment, the method comprising:

measuring (202) a corresponding resource utilization signal at each of a plurality of nodes (216) within a cloud computing environment (200) that each hosts at least one corresponding virtual machine (VM);

based on each corresponding resource utilization signal, identifying (203) a set of candidate nodes (301e), each candidate node comprising a corresponding stranded resource that is unutilized due to utilization of a corresponding bottleneck resource at the candidate node, wherein a stranded resource is a resource of a first type on a hosting node which is prevented from being used for virtual machine, VM, deployment due to insufficient available resource of a second type at the hosting node; and wherein a bottleneck resource is the second type of resource, and further wherein the identifying (203) the set of candidate nodes (301e) includes calculating (205) an amount of the corresponding stranded resource at each candidate node, and wherein identifying (203) the set of candidate nodes (301e) comprises determining (206), from the plurality of nodes, at least one second node whose corresponding stranded resource is temporarily stranded; and

excluding (206) the at least one second node from the set of candidate nodes;

from a plurality of VMs hosted at the set of candidate nodes, identifying (208) a set of candidate VMs (401e) for migration for stranded resource recovery, including calculating (211) a score for each candidate VM based on a degree of imbalance between the corresponding stranded resource and the corresponding bottleneck resource at a candidate node hosting the candidate VM; and

initiating (212) migration of at least one candidate VM in the set of candidate VMs, wherein

initiating migration of at least one candidate VM in the set of candidate VMs includes selecting (212) the at least one candidate VM for migration based on having sorted the set of candidate VMs, and further wherein initiating migration of at least one candidate VM in the set of candidate VMs includes migrating (213) the at least one candidate VM from a first node of the plurality of nodes to a second node of the plurality of nodes.

2.  The method of claim 1, wherein each corresponding resource utilization signal indicates utilization of at least one of:

a memory resource,
a central processing unit resource,
a disk resource,
a network resource, or
a platform resource comprising an exhaustible non-physical resource provided by a platform supporting operation of VMs.

3.  The method of any of claim 1 or claim 2, wherein identifying the set of candidate nodes also includes:

identifying (204), from the plurality of nodes, at least one first node that is included on an allow list or a block list; and
excluding (204) the at least one first node from the set of candidate nodes.

4.  The method of any of claim 1 to claim 3, wherein identifying the set of candidate nodes also includes sorting (207) the set of candidate nodes based on the amount of the corresponding stranded resource at each candidate node.

5.  The method of any of claim 1 to claim 4, wherein identifying the set of candidate VMs also includes:

identifying (209), from the plurality of VMs hosted at the set of candidate nodes, at least one first VM as being a priority VM; and
excluding (209) the at least one first VM from the set of candidate VMs.

6.  The method of any of claim 1 to claim 5, wherein identifying the set of candidate VMs also includes:

identifying (210), from the plurality of VMs hosted at the set of candidate nodes, at least one second VM as being a short-lived VM; and
excluding (210) the at least one second VM from the set of candidate VMs.

7.  The method of any of claim 1 to claim 6, wherein identifying the set of candidate VMs also includes sorting (211) the set of candidate VMs based on the score for each candidate VM.

8. The method of claim 7, wherein identifying the set of candidate VMs also includes limiting (211) a number of candidate VMs in the set of candidate VMs based on having sorted the set of candidate VMs.

9. The method of any of claim 1 to claim 8, wherein initiating migration of at least one candidate VM in the set of candidate VMs includes delaying (212) the migration until a node maintenance event.

10. The method of any of claim 1 to claim 9, wherein identifying the set of candidate nodes also includes at least one of:

considering a first resource configuration of a first individual VM that is queued for allocation within the plurality of nodes;
considering a second resource configuration of a second individual VM that is predicted for allocation within the plurality of nodes;
considering a third resource configuration of a first set of a plurality of VMs that is queued for allocation within the plurality of nodes; or
considering a fourth resource configuration of a second set of a plurality of VMs that is predicted for allocation within the plurality of nodes.

11. A computer system (201) comprising:

a processor; and
a computer storage media that stores computer-executable instructions that are executable by the processor to cause the computer system to at least:
measure (202) a corresponding resource utilization signal at each of a plurality of nodes (216) within a cloud computing environment (200) that each hosts at least one corresponding virtual machine (VM);
based on each corresponding resource utilization signal, identify (203) a set of candidate nodes (301e), each candidate node comprising a corresponding stranded resource that is unutilized due to utilization of a corresponding bottleneck resource at the candidate node, wherein a stranded resource is a resource of a first type on a hosting node which is prevented from being used for virtual machine, VM, deployment due to insufficient available resource of a second type at the hosting node; and wherein a bottleneck resource is the second type of resource , and further wherein the identifying (203) the set of candidate nodes (301e) includes calculating (205) an amount of the corresponding stranded resource at each candidate node, and wherein identifying (203) the set of candidate nodes (301e) comprises determining (206), from the plurality of nodes, at least one second node whose corresponding stranded resource is temporarily stranded; and

excluding (206) the at least one second node from the set of candidate nodes;
from a plurality of VMs hosted at the set of candidate nodes, identify (208) a set of candidate VMs (401e) for migration for stranded resource recovery, including calculating (211) a score for each candidate VM based on a degree of imbalance between the corresponding stranded resource and the corresponding bottleneck resource at a candidate node hosting the candidate VM; and
initiate (212) migration of at least one candidate VM in the set of candidate VMs, wherein initiating migration of at least one candidate VM in the set of candidate VMs includes selecting (212) the at least one candidate VM for migration based on having sorted the set of candidate VMs, and further wherein initiating migration of at least one candidate VM in the set of candidate VMs includes migrating (213) the at least one candidate VM from a first node of the plurality of nodes to a second node of the plurality of nodes.

12. A computer storage media that stores computer-executable instructions that are executable by a processor to cause a computer system to at least:

measure (202) a corresponding resource utilization signal at each of a plurality of nodes (206) within a cloud computing environment (200) that each hosts at least one corresponding virtual machine (VM);
based on each corresponding resource utilization signal, identify (203) a set of candidate nodes (301e), each candidate node comprising a corresponding stranded resource that is unutilized due to utilization of a corresponding bottleneck resource at the candidate node, wherein a stranded resource is a resource of a first type on a hosting node which is prevented from being used for virtual machine, VM, deployment due to insufficient available resource of a second type at the hosting node; and wherein a bottleneck resource is the second type of resource , and further wherein the identifying (203) the set of candidate nodes (301e) includes calculating (205) an amount of the corresponding stranded resource at each candidate node, and wherein identifying (203) the set of candidate nodes (301e) comprises determining (206), from the plurality of nodes, at least one second node whose corresponding stranded resource is temporarily stranded; and

excluding (206) the at least one second node from the set of candidate nodes;

from a plurality of VMs hosted at the set of candidate nodes, identify (208) a set of candidate VMs (401e) for migration for stranded resource recovery, including calculating (211) a score for each candidate VM based on a degree of imbalance between the corresponding stranded resource and the corresponding bottleneck resource at a candidate node hosting the candidate VM; and

initiate (212) migration of at least one candidate VM in the set of candidate VMs, wherein

initiating migration of at least one candidate VM in the set of candidate VMs includes selecting (212) the at least one candidate VM for migration based on having sorted the set of candidate VMs, and further wherein

initiating migration of at least one candidate VM in the set of candidate VMs includes migrating (213) the at least one candidate VM from a first node of the plurality of nodes to a second node of the plurality of nodes.

13. A computer storage media as claimed in claim 12 wherein each corresponding resource utilization signal indicates utilization of at least one of:

a memory resource,

a central processing unit resource,

a disk resource,

a network resource, or

a platform resource comprising an exhaustible non-physical resource provided by a platform supporting operation of VMs.

14. A computer storage medium as claimed in claim 12 or claim 13 wherein identifying the set of candidate nodes also includes:

identifying (204), from the plurality of nodes, at least one first node that is included on an allow list or a block list; and excluding (204) the at least one first node from the set of candidate nodes.

15. A computer program comprising instructions which when executed on a computer implement the method of any of claims 1 to 10.

**Patentansprüche**

1. Verfahren (500) zum Wiederherstellen von festhängenden Ressourcen innerhalb einer Cloud-Computing-Umgebung, das von einem Computersystem (201) umgesetzt wird, das einen Prozessor beinhaltet, wobei das Verfahren umfasst:

Messen (202) eines entsprechenden Ressourcennutzungssignals an jedem einer Mehrzahl von Knoten (216) innerhalb einer Cloud-Computing-Umgebung (200), in der jeweils mindestens eine entsprechende virtuelle Maschine (VM) gehostet wird;

auf der Grundlage jedes entsprechenden Ressourcennutzungssignals Identifizieren (203) eines Satzes von Kandidatenknoten (301e), wobei jeder Kandidatenknoten eine entsprechende festhängende Ressource umfasst, die aufgrund der Nutzung einer entsprechenden Engpassressource am Kandidatenknoten nicht genutzt wird, wobei eine festhängende Ressource eine Ressource eines ersten Typs auf einem Hostingknoten ist, die aufgrund unzureichender verfügbarer Ressourcen eines zweiten Typs am Hostingknoten nicht für die Bereitstellung virtueller Maschinen, VM, verwendet werden kann; und wobei eine Engpassressource der zweite Typ von Ressource ist, und ferner wobei das Identifizieren (203) des Satzes von Kandidatenknoten (301e) das Berechnen (205) einer Menge der entsprechenden festhängenden Ressource an jedem Kandidatenknoten umfasst und wobei das Identifizieren (203) des Satzes von Kandidatenknoten (301e) das Ermitteln mindestens eines zweiten Knoten aus der Mehrzahl von Knoten, dessen entsprechende festhängende Ressource vorübergehend festhängt; und

Ausnehmen (206) des mindestens einen zweiten Knotens aus dem Satz von Kandidatenknoten;

aus einer Mehrzahl von VMs, die auf dem Satz von Kandidatenknoten gehostet werden, Identifizieren (208) eines Satzes von Kandidaten-VMs (401e) für die Migration zur Wiederherstellung von festhängenden Ressourcen, einschließlich des Berechnens (211) eines Werts für jede Kandidaten-VM basierend auf einem Grad an Ungleichgewicht zwischen der entsprechenden festhängenden Ressource und der entsprechenden Engpassressource auf einem Kandidatenknoten, auf dem die Kandidaten-VM gehostet wird; und

Einleiten (212) einer Migration mindestens einer Kandidaten-VM in dem Satz von Kandidaten-VMs, wobei

das Einleiten der Migration von mindestens einer Kandidaten-VM in dem Satz von Kandidaten-VMs das Auswählen (212) der mindestens einen Kandidaten-VM zur Migration basierend auf einer durchgeführten Sortierung des Satzes von Kandidaten-VMs beinhaltet, und ferner wobei
das Einleiten der Migration von mindestens einer Kandidaten-VM in dem Satz von Kandidaten-VMs das Migrieren (213) der mindestens einen Kandidaten-VM von einem ersten Knoten der Mehrzahl von Knoten auf einen zweiten Knoten der Mehrzahl von Knoten beinhaltet.

2. Verfahren nach Anspruch 1, wobei jedes entsprechende Ressourcennutzungssignal die Nutzung von mindestens einem anzeigt aus:

einer Speicherressource,
einer Ressource einer zentralen Verarbeitungseinheit,
einer Plattenressource,
einer Netzwerkressource, oder
einer Plattformressource, die eine erschöpfbare nichtphysische Ressource umfasst, die von einer Plattform bereitgestellt wird, die den Betrieb von VMs unterstützt.

3. Verfahren nach einem der Ansprüche 1 oder 2, wobei das Identifizieren des Satzes von Kandidatenknoten auch beinhaltet:

Identifizieren (204) mindestens eines ersten Knotens aus der Mehrzahl von Knoten, der in einer Zugelassen-Liste oder Geblockt-Liste enthalten ist; und
Ausnehmen (204) des mindestens einen ersten Knotens aus dem Satz von Kandidatenknoten.

4. Verfahren nach einem der Ansprüche 1 oder 3, wobei das Identifizieren des Satzes von Kandidatenknoten auch das Sortieren (207) des Satzes von Kandidatenknoten basierend auf der Menge der entsprechenden festhängenden Ressource an jedem Kandidatenknoten beinhaltet.

5. Verfahren nach einem der Ansprüche 1 bis 4, wobei das Identifizieren des Satzes von Kandidaten-VMs auch beinhaltet:

Identifizieren (209) mindestens einer ersten VM aus der Mehrzahl von VMs, die auf dem Satz von Kandidatenknoten gehostet werden, als Prioritäts-VM; und
Ausnehmen (209) der mindestens einen ersten VM aus dem Satz von Kandidaten-VMs.

6. Verfahren nach einem der Ansprüche 1 bis 5, wobei das Identifizieren des Satzes von Kandidaten-VMs auch beinhaltet:

Identifizieren (210) mindestens einer zweiten VM aus der Mehrzahl von VMs, die auf dem Satz von Kandidatenknoten gehostet werden, als kurzlebige VM; und
Ausnehmen (210) der mindestens einen zweiten VM aus dem Satz von Kandidaten-VMs.

7. Verfahren nach einem der Ansprüche 1 bis 6, wobei das Identifizieren des Satzes von Kandidaten-VMs auch das Sortieren (211) des Satzes von Kandidaten-VMs auf Basis des Werts für jede Kandidaten-VM beinhaltet.

8. Verfahren nach Anspruch 7, wobei das Identifizieren des Satzes von Kandidaten-VMs auch das Begrenzen (211) einer Anzahl von Kandidaten-VMs in dem Satz von Kandidaten-VMs basierend auf der durchgeführten Sortierung des Satzes von Kandidaten-VMs beinhaltet.

9. Verfahren nach einem der Ansprüche 1 bis 8, wobei das Einleiten der Migration von mindestens einer Kandidaten-VM in dem Satz von Kandidaten-VMs das Verzögern (212) der Migration bis zu einem Knotenwartungsereignis beinhaltet.

10. Verfahren nach einem der Ansprüche 1 bis 9, wobei das Identifizieren des Satzes von Kandidatenknoten auch mindestens eines beinhaltet aus:

Erwägen einer ersten Ressourcenkonfiguration einer ersten einzelnen VM, die für die Zuweisung innerhalb der Mehrzahl von Knoten in die Warteschlange gestellt wird;

Erwägen einer zweiten Ressourcenkonfiguration einer zweiten einzelnen VM, die für die Zuweisung innerhalb der Mehrzahl von Knoten vorhergesagt wird;

Erwägen einer dritten Ressourcenkonfiguration eines ersten Satzes einer Mehrzahl von VMs, die für die Zuweisung innerhalb der Mehrzahl von Knoten in die Warteschlange gestellt wird; oder

Erwägen einer vierten Ressourcenkonfiguration eines zweiten Satzes einer Mehrzahl von VMs, die für die Zuweisung innerhalb der Mehrzahl von Knoten vorhergesagt wird.

11. Computersystem (201), umfassend:

einen Prozessor; und

ein Computerspeichermedium, das computerausführbare Anweisungen speichert, die durch den Prozessor ausführbar sind, um das Computersystem mindestens dazu zu veranlassen:

Messen (202) eines entsprechenden Ressourcennutzungssignals an jedem einer Mehrzahl von Knoten (216) innerhalb einer Cloud-Computing-Umgebung (200), in der jeweils mindestens eine entsprechende virtuelle Maschine (VM) gehostet wird;

auf der Grundlage jedes entsprechenden Ressourcennutzungssignals Identifizieren (203) eines Satzes von Kandidatenknoten (301e), wobei jeder Kandidatenknoten eine entsprechende festhängende Ressource umfasst, die aufgrund der Nutzung einer entsprechenden Engpassressource am Kandidatenknoten nicht genutzt wird, wobei eine festhängende Ressource eine Ressource eines ersten Typs auf einem Hostingknoten ist, die aufgrund unzureichender verfügbarer Ressourcen eines zweiten Typs am Hostingknoten nicht für die Bereitstellung virtueller Maschinen, VM, verwendet werden kann; und wobei eine Engpassressource der zweite Typ von Ressource ist, und ferner wobei das Identifizieren (203) des Satzes von Kandidatenknoten (301e) das Berechnen (205) einer Menge der entsprechenden festhängenden Ressource an jedem Kandidatenknoten umfasst und wobei das Identifizieren (203) des Satzes von Kandidatenknoten (301e) das Ermitteln mindestens eines zweiten Knoten aus der Mehrzahl von Knoten, dessen entsprechende festhängende Ressource vorübergehend festhängt; und

Ausnehmen (206) des mindestens einen zweiten Knotens aus dem Satz von Kandidatenknoten;

aus einer Mehrzahl von VMs, die auf dem Satz von Kandidatenknoten gehostet werden, Identifizieren (208) eines Satzes von Kandidaten-VMs (401e) für die Migration zur Wiederherstellung von festhängenden Ressourcen, einschließlich des Berechnens (211) eines Werts für jede Kandidaten-VM basierend auf einem Grad an Ungleichgewicht zwischen der entsprechenden festhängenden Ressource und der entsprechenden Engpassressource auf einem Kandidatenknoten, auf dem die Kandidaten-VM gehostet wird; und Einleiten (212) einer Migration mindestens einer Kandidaten-VM in dem Satz von Kandidaten-VMs, wobei das Einleiten der Migration von mindestens einer Kandidaten-VM in dem Satz von Kandidaten-VMs das Auswählen (212) der mindestens einen Kandidaten-VM zur Migration basierend auf einer durchgeführten Sortierung des Satzes von Kandidaten-VMs beinhaltet, und ferner wobei das Einleiten der Migration von mindestens einer Kandidaten-VM in dem Satz von Kandidaten-VMs das Migrieren (213) der mindestens einen Kandidaten-VM von einem ersten Knoten der Mehrzahl von Knoten auf einen zweiten Knoten der Mehrzahl von Knoten beinhaltet.

12. Computerspeichermedium, das computerausführbare Anweisungen speichert, die durch einen Prozessor ausführbar sind, um ein Computersystem mindestens dazu zu veranlassen:

Messen (202) eines entsprechenden Ressourcennutzungssignals an jedem einer Mehrzahl von Knoten (206) innerhalb einer Cloud-Computing-Umgebung (200), in der jeweils mindestens eine entsprechende virtuelle Maschine (VM) gehostet wird;

auf der Grundlage jedes entsprechenden Ressourcennutzungssignals Identifizieren (203) eines Satzes von Kandidatenknoten (301e), wobei jeder Kandidatenknoten eine entsprechende festhängende Ressource umfasst, die aufgrund der Nutzung einer entsprechenden Engpassressource am Kandidatenknoten nicht genutzt wird, wobei eine festhängende Ressource eine Ressource eines ersten Typs auf einem Hostingknoten ist, die aufgrund unzureichender verfügbarer Ressourcen eines zweiten Typs am Hostingknoten nicht für die Bereitstellung virtueller Maschinen, VM, verwendet werden kann; und wobei eine Engpassressource der zweite Typ von Ressource ist, und ferner wobei das Identifizieren (203) des Satzes von Kandidatenknoten (301e) das Berechnen (205) einer Menge der entsprechenden festhängenden Ressource an jedem Kandidatenknoten umfasst und wobei das Identifizieren (203) des Satzes von Kandidatenknoten (301e) das Ermitteln mindestens eines zweiten Knoten aus der Mehrzahl von Knoten, dessen entsprechende festhängende Ressource vorübergehend festhängt; und

Ausnehmen (206) des mindestens einen zweiten Knotens aus dem Satz von Kandidatenknoten;

aus einer Mehrzahl von VMs, die auf dem Satz von Kandidatenknoten gehostet werden, Identifizieren (208) eines Satzes von Kandidaten-VMs (401e) für die Migration zur Wiederherstellung von festhängenden Ressourcen, einschließlich des Berechnens (211) eines Werts für jede Kandidaten-VM basierend auf einem Grad an Ungleichgewicht zwischen der entsprechenden festhängenden Ressource und der entsprechenden Engpassressource auf einem Kandidatenknoten, auf dem die Kandidaten-VM gehostet wird; und

Einleiten (212) einer Migration mindestens einer Kandidaten-VM in dem Satz von Kandidaten-VMs, wobei das Einleiten der Migration von mindestens einer Kandidaten-VM in dem Satz von Kandidaten-VMs das Auswählen (212)

der mindestens einen Kandidaten-VM zur Migration basierend auf einer durchgeführten Sortierung des Satzes von Kandidaten-VMs beinhaltet, und ferner wobei

das Einleiten der Migration von mindestens einer Kandidaten-VM in dem Satz von Kandidaten-VMs das Migrieren (213) der mindestens einen Kandidaten-VM von einem ersten Knoten der Mehrzahl von Knoten auf einen zweiten Knoten der Mehrzahl von Knoten beinhaltet.

13. Computerspeichermedium nach Anspruch 12, wobei jedes entsprechende Ressourcennutzungssignal die Nutzung von mindestens einem anzeigt aus:

einer Speicherressource,
einer Ressource einer zentralen Verarbeitungseinheit,
einer Plattenressource,
einer Netzwerkressource, oder

einer Plattformressource, die eine erschöpfbare nichtphysische Ressource umfasst, die von einer Plattform bereitgestellt wird, die den Betrieb von VMs unterstützt.

14. Computerspeichermedium nach einem der Ansprüche 12 oder 13, wobei das Identifizieren des Satzes von Kandidatenknoten auch beinhaltet:
Identifizieren (204) mindestens eines ersten Knotens aus der Mehrzahl von Knoten, der in einer Zugelassen-Liste oder Geblockt-Liste enthalten ist; und
Ausnehmen (204) des mindestens einen ersten Knotens aus dem Satz von Kandidatenknoten.

15. Computerprogramm, umfassend Anweisungen, die, wenn sie auf einem Computer ausgeführt werden, das Verfahren nach einem der Ansprüche 1 bis 10 implementieren.

**Revendications**

1. Procédé (500), mis en œuvre par un système informatique (201) qui comporte un processeur, pour la récupération de ressources délaissées dans un environnement informatique en nuage, le procédé comprenant :

la mesure (202) d'un signal d'utilisation de ressources correspondant sur chacun d'une pluralité de nœuds (216) dans un environnement informatique en nuage (200) qui héberge chacun au moins une machine virtuelle (VM) correspondante ;
sur la base de chaque signal d'utilisation de ressources correspondant, l'identification (203) d'un ensemble de nœuds candidats (301e), chaque nœud candidat comprenant une ressource délaissée correspondante qui est inutilisée en raison de l'utilisation d'une ressource goulot d'étranglement correspondante sur le nœud candidat, dans lequel une ressource délaissée est une ressource d'un premier type sur un nœud hôte qui ne peut être utilisée pour le déploiement d'une machine virtuelle, VM, en raison d'une insuffisance de ressources disponibles d'un second type sur le nœud hôte ; et dans lequel une ressource goulot d'étranglement est le second type de ressource, et dans lequel en outre l'identification (203) de l'ensemble de nœuds candidats (301e) comporte le calcul (205) d'une quantité de la ressource délaissée correspondante sur chaque nœud candidat, et dans lequel l'identification (203) de l'ensemble de nœuds candidats (301e) comprend la détermination (206), à partir de la pluralité de nœuds, d'au moins un second nœud dont la ressource délaissée correspondante est temporairement délaissée ; et

l'exclusion (206) de l'au moins un second nœud de l'ensemble de nœuds candidats ;

à partir d'une pluralité de VM hébergées sur l'ensemble de nœuds candidats, l'identification (208) d'un ensemble de VM candidates (401e) pour migration pour la récupération de ressources délaissées, comportant le calcul (211) d'un score pour chaque VM candidate sur la base d'un degré de déséquilibre entre la ressource délaissée correspondante et la ressource goulot d'étranglement correspondante sur un nœud candidat hébergeant la VM candidate ; et

l'initiation (212) de la migration d'au moins une VM candidate dans l'ensemble de VM candidates, dans lequel

l'initiation de la migration d'au moins une VM candidate dans l'ensemble de VM candidates comporte la sélection (212) de l'au moins une VM candidate pour migration sur la base du tri de l'ensemble de VM candidates, et dans lequel en outre

l'initiation de la migration d'au moins une VM candidate dans l'ensemble de VM candidates comporte la migration (213) de l'au moins une VM candidate d'un premier nœud de la pluralité de nœuds vers un second nœud de la pluralité de nœuds.

2. Procédé selon la revendication 1, dans lequel chaque signal d'utilisation de ressources correspondant indique l'utilisation d'au moins l'une des ressources suivantes :

une ressource de mémoire,
une ressource d'unité centrale de traitement,
une ressource disque,
une ressource réseau, ou
une ressource de plateforme comprenant une ressource non physique épuisable fournie par une plateforme prenant en charge le fonctionnement de VM.

3. Procédé selon l'une quelconque de la revendication 1 ou de la revendication 2, dans lequel l'identification de l'ensemble de nœuds candidats comporte également :

l'identification (204), à partir de la pluralité de nœuds, d'au moins un premier nœud qui est inclus sur une liste d'autorisation ou une liste de blocage ; et
l'exclusion (204) de l'au moins un premier nœud de l'ensemble de nœuds candidats.

4. Procédé selon l'une quelconque de la revendication 1 à la revendication 3, dans lequel l'identification de l'ensemble de nœuds candidats comporte également le tri (207) de l'ensemble de nœuds candidats sur la base de la quantité de la ressource délaissée correspondante sur chaque nœud candidat.

5. Procédé selon l'une quelconque de la revendication 1 à la revendication 4, dans lequel l'identification de l'ensemble de VM candidates comporte également :

l'identification (209), à partir de la pluralité de machines virtuelles hébergées sur l'ensemble de nœuds candidats, d'au moins une première VM comme étant une VM prioritaire ; et
l'exclusion (209) de l'au moins une première VM de l'ensemble de VM candidates.

6. Procédé selon l'une quelconque de la revendication 1 à la revendication 5, dans lequel l'identification de l'ensemble de VM candidates comporte également :

l'identification (210), à partir de la pluralité de VM hébergées sur l'ensemble de nœuds candidats, d'au moins une seconde VM comme étant une VM à durée de vie courte ; et
l'exclusion (210) de l'au moins une seconde VM de l'ensemble de VM candidates.

7. Procédé selon l'une quelconque de la revendication 1 à la revendication 6, dans lequel l'identification de l'ensemble de VM candidates comporte également le tri (211) de l'ensemble de VM candidates sur la base du score de chaque VM candidate.

8. Procédé selon la revendication 7, dans lequel l'identification de l'ensemble de VM candidates comporte également la limitation (211) d'un nombre de VM candidates dans l'ensemble de VM candidates sur la base du tri de l'ensemble de VM candidates.

9. Procédé selon l'une quelconque de la revendication 1 à la revendication 8, dans lequel l'initiation de la migration d'au moins une VM candidate dans l'ensemble de VM candidates comporte le report (212) de la migration jusqu'à un événement de maintenance de nœud.

10. Procédé selon l'une quelconque de la revendication 1 à la revendication 9, dans lequel l'identification de l'ensemble de nœuds candidats comporte également au moins l'un des éléments suivants :

la considération d'une première configuration de ressources d'une première VM individuelle qui est mise en file d'attente pour allocation dans la pluralité de nœuds ;
la considération d'une deuxième configuration de ressources d'une seconde VM individuelle qui est prévue pour allocation dans la pluralité de nœuds ;
la considération d'une troisième configuration de ressources d'un premier ensemble d'une pluralité de VM qui sont mises en file d'attente pour allocation dans la pluralité de nœuds ; ou
la considération d'une quatrième configuration de ressources d'un second ensemble d'une pluralité de VM qui est prévue pour allocation dans la pluralité de nœuds.

11. Système informatique (201) comprenant :

un processeur ; et
un support de stockage informatique qui stocke des instructions exécutables par ordinateur qui sont exécutables par le processeur pour amener le système informatique à au moins :

mesurer (202) un signal d'utilisation de ressources correspondant sur chacun d'une pluralité de nœuds (216) dans un environnement informatique en nuage (200) qui héberge chacun au moins une machine virtuelle (VM) correspondante ;

sur la base de chaque signal d'utilisation de ressources correspondant, identifier (203) un ensemble de nœuds candidats (301e), chaque nœud candidat comprenant une ressource délaissée correspondante qui est inutilisée en raison de l'utilisation d'une ressource goulot d'étranglement correspondante sur le nœud candidat, dans lequel une ressource délaissée est une ressource d'un premier type sur un nœud hôte qui ne peut être utilisée pour le déploiement d'une machine virtuelle, VM, en raison d'une insuffisance de ressources disponibles d'un second type sur le nœud hôte ; et dans lequel une ressource goulot d'étranglement est le second type de ressource, et dans lequel en outre l'identification (203) de l'ensemble de nœuds candidats (301e) comporte le calcul (205) d'une quantité de la ressource délaissée correspondante sur chaque nœud candidat, et dans lequel l'identification (203) de l'ensemble de nœuds candidats (301e) comprend la détermination (206), à partir de la pluralité de nœuds, d'au moins un second nœud dont la ressource délaissée correspondante est temporairement délaissée ; et

exclure (206) l'au moins un second nœud de l'ensemble de nœuds candidats ;
à partir d'une pluralité de VM hébergées sur l'ensemble de nœuds candidats, identifier (208) un ensemble de VM candidates (401e) pour migration pour la récupération de ressources délaissées, comportant le calcul (211) d'un score pour chaque VM candidate sur la base d'un degré de déséquilibre entre la ressource délaissée correspondante et la ressource goulot d'étranglement correspondante sur un nœud candidat hébergeant la machine virtuelle candidate ; et
initier (212) la migration d'au moins une VM candidate dans l'ensemble de VM candidates, dans lequel l'initiation de la migration d'au moins une VM candidate dans l'ensemble de VM candidates comporte la sélection (212) de l'au moins une VM candidate pour migration sur la base du tri de l'ensemble de VM candidates, et dans lequel en outre
l'initiation de la migration d'au moins une VM candidate dans l'ensemble de VM candidates comporte la migration (213) de l'au moins une VM candidate d'un premier nœud de la pluralité de nœuds vers un second nœud de la pluralité de nœuds.

12. Support de stockage informatique qui stocke des instructions exécutables par ordinateur qui sont exécutables par un processeur pour amener un système informatique à au moins :

mesurer (202) un signal d'utilisation de ressources correspondant sur chacun d'une pluralité de nœuds (206) dans un environnement informatique en nuage (200) qui héberge chacun au moins une machine virtuelle (VM) correspondante ;

sur la base de chaque signal d'utilisation de ressources correspondant, identifier (203) un ensemble de nœuds candidats (301e), chaque nœud candidat comprenant une ressource délaissée correspondante qui est inutilisée en raison de l'utilisation d'une ressource goulot d'étranglement correspondante sur le nœud candidat, dans lequel une ressource délaissée est une ressource d'un premier type sur un nœud hôte qui ne peut être utilisée pour le déploiement d'une machine virtuelle, VM, en raison d'une insuffisance de ressources disponibles d'un second type sur le nœud hôte ; et dans lequel une ressource goulot d'étranglement est le second type de ressource, et dans lequel en outre l'identification (203) de l'ensemble de nœuds candidats (301e) comporte le calcul (205) d'une quantité de la ressource délaissée correspondante sur chaque nœud candidat, et dans lequel l'identification (203) de l'ensemble de nœuds candidats (301e) comprend la détermination (206), à partir de la pluralité de nœuds, d'au moins un second nœud dont la ressource délaissée correspondante est temporairement délaissée ; et

exclure (206) l'au moins un second nœud de l'ensemble de nœuds candidats ;

à partir d'une pluralité de VM hébergées sur l'ensemble de nœuds candidats, identifier (208) un ensemble de VM candidates (401e) pour migration pour la récupération de ressources délaissées, comportant le calcul (211) d'un score pour chaque VM candidate sur la base d'un degré de déséquilibre entre la ressource délaissée correspondante et la ressource goulot d'étranglement correspondante sur un nœud candidat hébergeant la machine virtuelle candidate ; et

initier (212) la migration d'au moins une VM candidate dans l'ensemble de VM candidates, dans lequel

l'initiation de la migration d'au moins une VM candidate dans l'ensemble de machines virtuelles candidates comporte la sélection (212) de l'au moins une VM candidate pour migration sur la base du tri de l'ensemble de VM candidates, et dans lequel en outre

l'initiation de la migration d'au moins une VM candidate dans l'ensemble de VM candidates comporte la migration (213) de l'au moins une VM candidate d'un premier nœud de la pluralité de nœuds vers un second nœud de la pluralité de nœuds.

13. Support de stockage informatique selon la revendication 12 dans lequel chaque signal d'utilisation de ressources correspondant indique l'utilisation d'au moins l'une des ressources suivantes :

une ressource de mémoire,
une ressource d'unité centrale de traitement,
une ressource disque,
une ressource réseau, ou

une ressource de plateforme comprenant une ressource non physique épuisable fournie par une plateforme prenant en charge le fonctionnement de VM.

14. Support de stockage informatique selon la revendication 12 ou la revendication 13 dans lequel l'identification de l'ensemble de nœuds candidats comporte également :
l'identification (204), à partir de la pluralité de nœuds, d'au moins un premier nœud qui est inclus sur une liste d'autorisation ou une liste de blocage ; et
l'exclusion (204) de l'au moins un premier nœud de l'ensemble de nœuds candidats.

15. Programme informatique comprenant des instructions qui lorsqu'elles sont exécutées sur un ordinateur mettent en œuvre le procédé selon l'une quelconque des revendications 1 à 10.

100a

Total Memory: 512GB          Total Cores: 40

| Mem. Used By VMs: 512GB |

| Unused Cores: 10 |
| Cores Used By VMs: 30 |

# FIG. 1A

100b

Total Memory: 512GB          Total Cores: 40

| Mem. Used By VMs: 510GB |

| Unused Cores: 10 |
| Cores Used By VMs: 30 |

# FIG. 1B

FIG. 2

300

All Nodes
301a

Filter Nodes Based On An Allow List Or A
Block List
302

Filtered Nodes
301b

Identify Nodes With Stranded
Resources
303

Stranding Nodes
301c

Exclude Nodes That Are Temporarily
Stranding Resources
304

Candidate Nodes
301d

Sort Candidate Nodes
305

Sorted Candidate Nodes
301e

FIG. 3

400

```
VMs On Candidate Node(s)
401a
```
↓
```
Filter VMs Based On
Sensitivity                    402
```
↓
```
Filtered VMs
401b
```
↓
```
Exclude Short-Lived VMs  403
```
↓
```
Subset Of VMs On Candidate Node(s)
401c
```
↓
```
Score and Sort VMs       404
```
↓
```
Sorted VMs
401d
```
↓
```
Select Top N VMs         405
```
↓
```
Candidate VMs
401e
```

## FIG. 4

500

| Measure Resource Utilization Signals From Hosting Nodes | 501 |

| Using The Signals, Select A Set Of Candidate Hosting Nodes | 502 |
| Exclude Hosting Node(s) Based On An Allow Or Block List | 502a |
| Calculate Amounts Of Stranded Resources At Hosting Nodes | 502b |
| Exclude Temporarily Stranded Hosting Node(s) | 502c |
| Sort The Candidate Nodes Based On Stranded Resource Amounts | 502d |

| From The Set Of Candidate Hosting Notes, Identify A Set Of Candidate VMs | 503 |
| Exclude Priority VM(s) | 503a |
| Exclude Short-Lived VM(s) | 503b |
| Calculate An Imbalance Score For Each Candidate VM | 503c |
| Sort The Candidate VMs Based On Imbalance Score | 503d |
| Prune The Candidate VMs Based On Sorted Order | 503e |

| Initiate Migration Of Candidate VM(s) | 504 |

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021149743 A1

- CN 110493317 A